# EUROPÄISCHE PATENTSCHRIFT

(11) **EP 4 146 465 B1**
(45) Veröffentlichungstag und Bekanntmachung des Hinweises auf die Patenterteilung: **27.11.2024**
(21) Anmeldenummer: 21725691.6
(22) Anmeldetag: 04.05.2021
(51) Int. Cl.: B29D 30/06

(54) **HEIZPRESSE ZUR VULKANISATION EINES FAHRZEUGREIFENS**
HEATING PRESS FOR VULCANISING A VEHICLE TYRE
PRESSE CHAUFFANTE DE VULCANISATION D'UN PNEUMATIQUE DE VÉHICULE

(30) Priorität: 07.05.2020 DE 102020205744
(43) Veröffentlichungstag der Anmeldung: 15.03.2023
(73) Patentinhaber: Continental Reifen Deutschland GmbH, 30175 Hannover (DE)
(72) Erfinder: WENZEL, Karsten, 30165 Hannover (DE); WEDEKIND, Horst, 30165 Hannover (DE); RAMM, Michael, 30165 Hannover (DE)
(74) Vertreter: Continental Corporation
(86) Internationale Anmeldenummer: PCT/DE2021/200057
(87) Internationale Veröffentlichungsnummer: WO 2021/223822

(56) Entgegenhaltungen:
- EP-A2- 0 098 524
- EP-A2- 1 832 871
- DE-A1- 1 779 130
- DE-A1- 10 316 730
- DE-A1- 102018 216 754
- DE-C- 747 214
- US-A- 3 550 196
- US-A1- 2011 088 812

## Beschreibung

Die Erfindung betrifft eine Heizpresse zum Vulkanisieren eines Fahrzeugreifens mit einer 2-teiligen Haube aus einem Haubenoberteil und einem Haubenunterteil und mit einem in dem Haubenoberteil angeordneten Container, welcher die Vulkanisierform mit den Formteile zum Formen des Reifens aufweist, wobei das Haubenoberteil und das Haubenunterteil mit dem Container derart in Verbindung stehen, so dass beim Zusammenfahren der Haubenteile über einen in axialer Richtung erfolgenden Gesamthub, bei dem das offene Ende des Haubenoberteils in das offene Ende des Haubenunterteils nahezu spielfrei eintauchbar ist, die Formteile der Vulkanisierform in radialer Richtung schließbar sind, wobei der Gesamthub aus einem ersten Teilhub und einem zweiten Teilhub besteht, wobei nach dem ersten Teilhub die Haubenteile in einem ersten Überlappungsbereich überlappen und die Vulkanisierform noch geöffnet ist und wobei nach dem zweiten Teilhub die Haubenteile in einem zweiten größeren Überlappungsbereich überlappen und die Vulkanisierform geschlossen ist, wobei zur Erzeugbarkeit eines Vakuums im Haubeninnenraum
- das Haubenoberteil und das Haubenunterteil luftdicht ausgeführt sind,
- zumindest eine Ringdichtung in zumindest einem der beiden Haubenteile im Bereich des ersten Überlappungsbereiches angeordnet ist.

Die vorbeschriebene Heizpresse ist eine Standard-Heizpresse zum Vulkanisieren von Fahrzeugreifen unter atmosphärischen Bedingungen.

Die Heizpresse umfasst einen sogenannten Container, welcher die eigentliche segmentierte Vulkanisierform mit den dem Reifen formgebenden Formsegmenten und Seitenwandschalen sowie Wulstringen umfasst. Zudem sind Heizkammern zum Temperieren der formgebenden Teile angeordnet. Der Container ist während der Vulkanisation von einer 2-teiligen, geschlossenen Haube umgeben, welche im Stand der Technik primär zur Temperaturisolation während der Vulkanisation dient.

Eine Heizpresse der eingangs genannten Art ist beispielsweise aus der DE 17 79 130 A1 bekannt. Die Heizpresse weist eine Haube aus einem Haubenoberteil und einem Haubenunterteil auf. Beim Zusammenfahren der Haubenteile taucht das offene Ende des Haubenoberteils in das offene Ende des Haubenunterteils ein. Nach einem ersten Teilhub der Haubenteile überlappen diese in einem ersten Überlappungsbereich, wobei die Vulkaniserform noch geöffnet ist. Während die Vulkanisierform noch geöffnet ist, wird in dieser ein Vakuum erzeugt. Anschließend wird ein zweiter Teilhub durchgeführt, wodurch die Vulkaniserform geschlossen wird. An der Innenseite des Haubenunterteils ist eine ringförmig umlaufende Dichtung vorgesehen, an welche der Haubenoberteil bei geschlossener Heizpresse angedrückt wird. Durch die vorgeschlagene Heizpresse sollen bei der Vulkanisation Austriebe vermieden werden und die Vulkanisationszeit kurz und der Wärmeverbrauch gering sein.

Aus der DE 747 214 C ist eine Heizpresse mit einem evakierbaren Haubeninnenraum bekannt, wobei zur Erzeugung des Vakuums an den Dampfraum eine abschaltbare Unterdruckleitung angeschlossen ist.

Um Fehlstellen an der Reifenoberfläche möglichst zu vermeiden, muss die Luft zwischen der Oberfläche des Rohreifens und der Oberfläche der Formflächen entfernt werden. Hierzu ist es generell bekannt, dass 1000 bis 5000 Entlüftungsventile in den Formflächen der Formteile vorzusehen sind. Durch diese Entlüftungsventile wird die Luft aus dem Formenhohlraum nach radial und axial außen durch Entlüftungskanäle abgeführt. Jedoch müssen die Formteile einer neuen Vulkanisierform mit diesen Ventilen bestückt werden. Weiterhin neigen diese Ventile durch eindringendes Gummi von dem zu vulkanisierenden Reifen zum Verdrecken, so dass diese aufwändig ausgetauscht oder gereinigt werden müssen.

Der Erfindung liegt die Aufgabe zugrunde, eine Heizpresse zum Vulkanisieren eines Fahrzeugreifens unter Vakuum bereitzustellen, mit welcher zuverlässig Fahrzeugreifen unter Vakuum und unter Verzicht auf Entlüftungsventile in der Vulkanisierform vulkanisiert werden kann. Weiterhin wird ein Verfahren zum zeiteffizienten Vulkanisieren eines Fahrzeugreifens unter Vakuum zur Verfügung gestellt.

Die Aufgabe wird dadurch gelöst, dass zur Erzeugung eines Vakuums im Haubeninnenraum
- im Haubeninnenraum mittels einer Pumpe und einem Vakuumtank ein Vakuum erzeugbar ist und wobei der Vakuumtank und die Pumpe mit dem Haubeninnenraum in Verbindung stehen und wobei der Vakuumtank und die Pumpe miteinander in Verbindung stehen,
wobei die Ringdichtung ein in seinem Durchmesser veränderbarer Schlauch oder eine differentiell gepumpte Doppelringdichtung ist.

Das Vakuum dient dazu, die Luft aus der Vulkanisierform, insbesondere zwischen der äußeren Oberfläche des Reifens und den Formflächen der formenden Teile der Vulkanisierform zu entfernen, um den zu vulkanisierenden Reifen hochqualitativ und ohne Fehlstellen fertigen zu können.

Wesentlich ist weiterhin, dass die Vulkanisierform selber keine Entlüftungsmittel zur Entlüftung des Formenhohlraumes aufweist. Durch die Vulkanisation unter Vakuum wird auf die im Stand der Technik in der Vulkanisierform angeordneten 1000 bis 5000 Entlüftungsventile verzichtet, durch welche die Luft aus dem Formenhohlraum nach radial außen abgeleitet wird. Hierdurch ist eine Nachbearbeitung der durch die Entlüftungsmittel erhaltenen Gummiaustriebe am Reifen und ein Austausch bzw. die Reinigung nicht mehr funktionsfähiger Entlüftungsventile nicht mehr notwendig. Dieses ist zeit- und kostengünstig. Zudem erhält der vulkanisierte Reifen durch die Vulkanisation unter Vakuum eine äußere Form, welche absolut frei von Fehlstellen ist und dadurch perfekt anmutet.

Weiterhin ist erfindungswesentlich, dass nur die 2-teilige Haube derart geändert wird, dass diese mittels einer neu anzuordnenden Dichtung ab dem Stadium des ersten Teilhubes luftdicht ist und ein Vakuum in ihrem Inneren hält. An dem Container oder der Vulkanisierform sollen ausdrücklich keine Veränderungen hinsichtlich luftdichtender Maßnahmen vorgenommen sein.

Der Begriff Vakuum meint Luftdruck im Bereich von 950mbar (abs) bis 0, 1mbar (abs). Die Ringdichtung weist vorzugsweise einen runden oder eckigen Querschnitt auf.

Der in seinem Durchmesser veränderbare Schlauch hat den Vorteil, dass die Ringdichtung geringer auf Relativbewegungen zwischen den Haubenteilen belastet wird und erst dann in seinem Durchmesser vergrößert wird, wenn die Dichtwirkung erforderlich ist.

Die differentiell gepumpte Doppelringdichtung hat den Vorteil, dass etwaige Leckagen mit geringen Pumpleistungen kompensiert werden können.

Vorteilhaft ist es, wenn die Ringdichtung in dem Haubenunterteil angeordnet ist. Das Haubenunterteil ist üblicherweise ortsfest, während das Haubenoberteil die axiale Verfahrbewegung durchführt. Das Vakuum wird erzeugt, in dem man sicherstellt, dass das Haubenoberteil und das Haubenunterteil durch jeweils mindestens eine Ringdichtung gegeneinander abgedichtete werden.

Um eine mechanische Abstützung der beiden Haubenteile gegeneinander zu verbessern, sind zusätzlich zu den Dichtungen Gleitbänder aus abriebfesten Hochtemperatur-Polymer, wie zum Beispiel aus PEEK, eingesetzt.

Vorteilhaft ist es, wenn die Ringdichtung in einer ringkreisförmigen Nut angeordnet ist, wobei der Durchmesser der Ringdichtung im dichtenden Zustand geringfügig größer als die Tiefe der Nut ist. Geringfügig größer meint, dass die Dichtung beim Einbau in die Nut und im dichtenden Zustand maximal 40% komprimiert wird im Vergleich zur kompressionsfreien Geometrie der Dichtung. Durch die genaue Auslegung der Nut im Verhältnis zur Dichtungsgeometrie wird einer Beschädigung der Dichtung(en) durch die Relativbewegung der beiden Haubenteile vorgebeugt und die Haltbarkeit verbessert.

Zweckmäßig ist es, wenn der Vakuumtank ein Volumen aufweist, welches etwa 5 bis 10mal größer als das Volumen der geschlossenen Haube (inklusive Form, Container, Reifenrohling, Heizbalg) ist. Hierdurch ist sichergestellt, dass in der Haube zuverlässig ein Vakuum erzeugbar ist. Zudem ist die erforderliche Zeit für das Erzeugen des notwendigen Vakuums signifikant reduziert. Dieses kann im Rahmen des normalen Be und Entladeprozeßes stattfinden.

Ein Ausführungsbeispiel einer Heizpresse und ein Verfahren zur Vakuum-Vulkanisation eines Fahrzeugluftreifens samt weiterer Vorteile sind anhand der nachfolgenden schematischen Figuren 1 bis 4 beschrieben. Es zeigen die:
- Fig. 1: eine erfindungsgemäße Heizpresse mit Container im geöffneten Zustand;
- Fig. 2: die Heizpresse der Fig. 1 in der Schließphase nach einem 1. Teilhub;
- Fig. 3: die Heizpresse der Fig. 1 und der Fig. 2 in geschlossenem Zustand nach einem 2. Teilhub;
- Fig. 4: eine andere erfindungsgemäße Heizpresse mit Container im geöffneten Zustand.

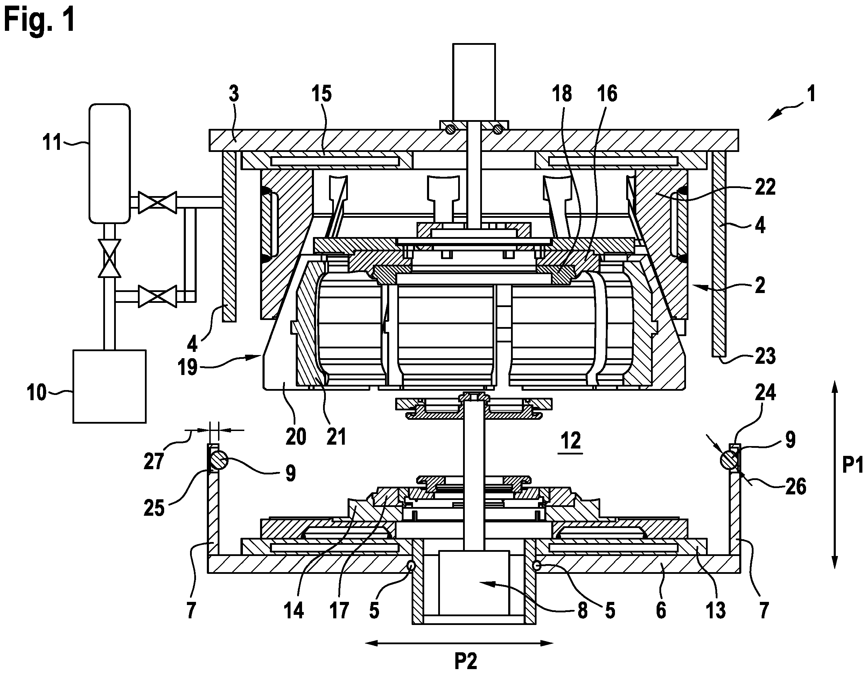

Die Fig. 1 zeigt eine erfindungsgemäße Heizpresse 1 mit einem Container 2 im geöffneten Zustand. Der Reifenrohling kann in die Heizpresse 1 eingebracht werden.

Die Heizpresse 1 umfasst ein Pressenoberteil 3, welches mit dem Haubenoberteil 4 in Verbindung steht und ein Pressenunterteil 6, welches mit dem Haubenunterteil 7 in Verbindung steht und weist die entsprechenden Mechanismen zum Positionieren des zu vulkanisierenden Reifens, zur Betätigung der Bestandteile der Vulkanisationsform, zum Einbringen der Heizmedien und zum Entfernen des fertig vulkanisierten Reifens auf. Der Container 2 ist während des Vulkanisationsvorganges durch die zweiteilige Haube aus Haubenoberteil 4 und Haubenunterteil 7 umschlossen. Es ist ein "Mittenmechanismus" 8 angeordnet. An dem Mittenmechanismus 8 ist ein Heizbalg (nicht dargestellt) befestigt, welcher in den Reifenrohling (nicht dargestellt) einfügbar ist. Zudem sind Düsen (nicht dargestellt) am Mittenmechanismus 8 angeordnet, durch welche ein Heizmedium in den Heizbalg (nicht dargestellt) eingebracht werden kann.

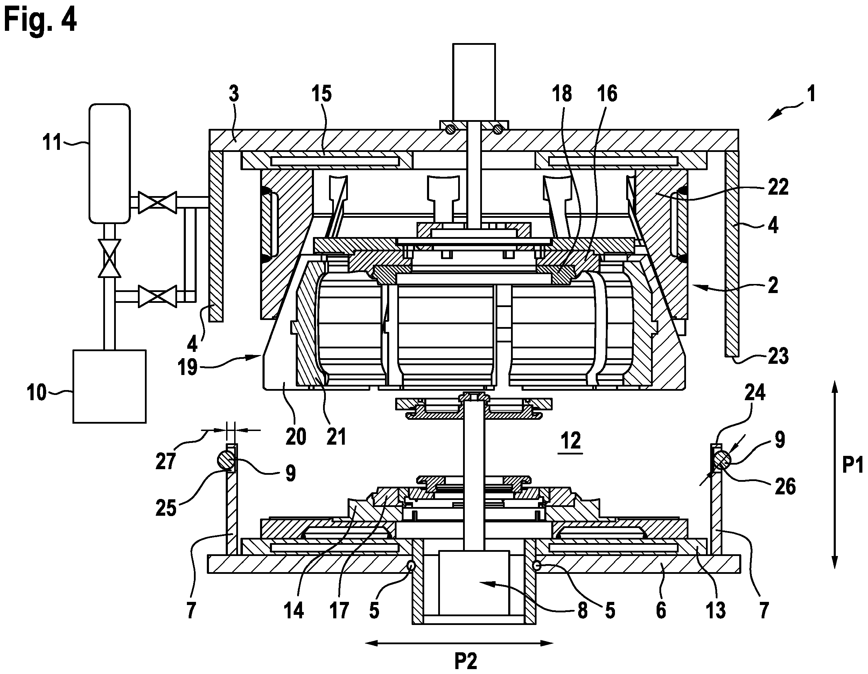

Das Haubenoberteil 4 und das Haubenunterteil 7 sind luftdicht bzw. vakuumdicht ausgeführt und weisen hierfür Dichtungen 5 zwischen jeweils den Haubenteilen 4, 7 und dem Mittenmechanismus 8 auf. Um die geschlossene Haube aus den beiden Haubenteilen 4, 7 vakuumdicht zu gestalten, ist zudem eine Ringdichtung 9 in dem Haubenunterteil 7 angeordnet, welche zum Haubeninnenraum (Fig.1-3) oder in einer anderen Ausführung der Erfindung in den Haubenaussenraum (Fig. 4) weist. Bei der Ausführung der Fig. 1-3 weist das Haubenoberteil 4 einen geringeren Durchmesser als das Haubenunterteil 7 auf und taucht somit in das Haubenunterteil 7 ein. Die andere Ausführung der Erfindung der Fig. 4 unterscheidet sich dadurch von der Ausführung der Fig. 1-3, dass die Dichtung im Haubenunterteil 7 zum Haubenaussenraum zeigt und der Durchmesser des Haubenoberteils 4 größer als der Durchmesser des Haubenunterteil 7 ist, so dass das Hauben-Oberteil 4 beim Zusammenfahren der Haubenteile das Haubenunterteil 7 umschließt. Die Ringdichtung 9 ist ein in seinem Durchmesser 26 veränderbarer Schlauch und ist in einer Nut 25, welche an der dem Haubenoberteil 4 zugewandten Seite in dem Haubenunterteil 7 angeordnet ist. Der Durchmesser 26 der Ringdichtung 9 ist geringfügig größer als die Tiefe 27 der Nut 25.

Mittels einer Pumpe 10 und einem Vakuumtank 11 ist ein Vakuum in dem Haubeninnenraum 12 erzeugbar, wobei der Vakuumtank 11 und die Pumpe 10 mit dem Haubeninnenraum 12 in Verbindung stehen und wobei der Vakuumtank 11 und die Pumpe 10 miteinander in Verbindung stehen. Durch ein Vakuum im Haubeninnenraum 12 insbesondere während des Einformens des Reifens und während der Vulkanisation ist auf übliche in der Formfläche der Vulkanisierform angeordnete Entlüftungsventile komplett verzichtet.

Der Container 2 ist ein üblicher, bereits im Stand der Technik bekannter Container 2.

Der Container 2 beinhaltet die segmentierte Vulkanisierform mit einer unteren Heizplatte 13, einer unteren Seitenwandschale 14, einer oberen Heizplatte 15, einer oberen Seitenwandschale 16, einem unteren Wulstring 17 und einem oberen Wulstring 18. Zu jenen Bestandteilen der Vulkanisationsform, die zum Öffnen und Schließen in senkrechter Richtung (Pfeil P1) bewegt werden, gehören der Segmentring 19 bestehend aus sieben bis neun Segmentschuhen 20 und die daran befestigten Profil-/Formsegmente 21 sowie die obere Seitenwandschale 16 mit dem oberen Wulstring 18. Die Segmentschuhe 20 werden beim Öffnen der Vulkanisationsform radial, in Richtung des Pfeiles P2 in Fig. 1, auseinandergefahren und geben derart den fertig vulkanisierten Reifen frei. An der oberen Heizplatte 15 ist ein Schließring 22 angeordnet, welcher eine abgeschrägte Innenfläche aufweist, die mit abgeschrägten Außenflächen der Segmentschuhe 20 des Segmentringes 19 derart zusammen wirken, dass beim Schließen der Vulkanisationsform die Segmentschuhe 20 in radialer Richtung zum geschlossenen Segmentring 19 zusammengefahren werden. In der unteren Heizplatte 13, der oberen Heizplatte 15 und im Schließring 22 sind Heizkammern enthalten, in welche zum Vulkanisieren des Reifens zumindest ein Heizmedium, insbesondere Sattdampf (Wasserdampf), eingeleitet wird. Auf diese Weise wird der Rohreifen (nicht dargestellt) von außen über die Segmentschuhe 20, die Seitenwandschalen 14, 16 und die Wulstringe 17, 18 beheizt, sodass diese Heizung üblicherweise als Außenheizung bezeichnet wird.

Ein üblicher Heizbalg (nicht dargestellt) ist in bekannter Weise angeordnet und wird mit zumindest einem Heizmedium unter Druck befüllt, um den Rohreifen in der Form von innen her zu zentrieren, wobei der Heizbalg in eine reifengemäße Torusform gebracht wird. Nachdem der Rohreifen über den Heizbalg von innen erhitzt wird, wird diese Art der Heizung als Innenheizung bezeichnet.

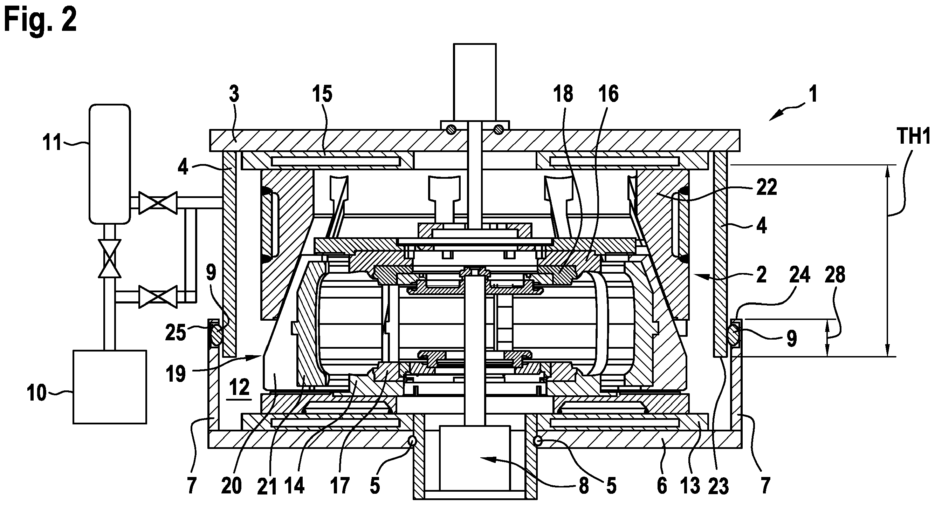

In der Fig. 2 ist die Heizpresse 1 der Fig. 1 in der Schließphase nach einem 1. Teilhub TH₁ dargestellt. Nach einem 1. Teilhub TH₁ ist das offene Ende des Haubenoberteils 4 in axialer Richtung um einen bestimmten Hub verfahren, um in das offene Ende des ortsfesten Haubenunterteils 7 nahezu spielfrei einzutauchen. Die Haubenteile 4, 7 überlappen einander in einem ersten Überlappungsbereich 28, in welchem die Ringdichtung 9 angeordnet ist. Die Vulkanisierform ist noch geöffnet. Die Haube aus den beiden Haubenteilen 4, 7 ist durch die Ringdichtung 9 nun vakuumdicht abgedichtet. Es wird die Verbindung zwischen Vakuumtank 11 und Haube 4, 7 zur Erzeugung eines Vakuums in der Haube 4, 7 geöffnet, wobei sich der Vakuumtank 11 im Zustand des Vakuums befindet. Dieses Vakuum wurde durch die Pumpe 10 während des davor liegenden Vulkanisationszeitraumes des vorherigen Reifens gebildet. Der Vakuumtank 11 weist ein Volumen auf, welches etwa 5 bis 10 mal größer als das Volumen der geschlossenen Haube 4, 7 ist.

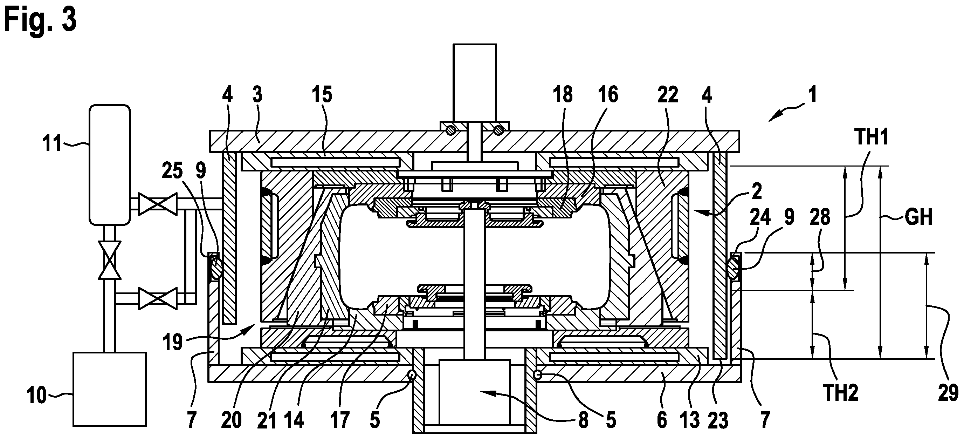

Die Fig. 3 zeigt die Heizpresse der Fig. 1 und der Fig. 2 in geschlossenem Zustand nach einem 2. Teilhub TH₂. Nachdem in der geschlossenen Haube 4, 7 der Fig. 2 ein Vakuum erzeugt ist, wird nun durch die Ausführung eines 2. Teilhubes TH₂ die luftleere Vulkanisierform komplett geschlossen und die Verbindung zwischen Vakuumtank 11 und Haube 4, 7 geschlossen.

Die Summe aus 1. Teilhub TH₁ und 2. Teilhub TH₂ ergibt den Gesamthub GH. Der Reifen wird vulkanisiert. Bei einem PKW-Reifen dauert das Vulkanisieren desselben etwa 15 Minuten. Während dieser Zeit wird die Verbindung zwischen Pumpe 10 und Vakuumtank 11 zur Erzeugung eines Vakuums im Vakuumtank 11 geöffnet, wobei die Verbindung der Pumpe 10 zur Haube 4, 7 und die Verbindung des Vakuumtanks 11 zur Haube 4, 7 jeweils geschlossen sind. Nach erfolgter Vulkanisation des Reifens wird das Haubenvolumen der Hauben 4,7 über ein Ventil belüftet (nicht dargestellt) und die Heizpresse 1 geöffnet, um den fertig vulkanisierten Reifen aus der Vulkanisierform zu entladen. Hierzu fährt zunächst das Haubenoberteil 4 auf und die Profilsegmente 21 werden gleichzeitig in radialer Richtung nach außen verfahren. Der Reifen wird freigegeben.

### Bezugszeichenliste

### (Teil der Beschreibung)

- 1: Heizpresse
- 2: Container
- 3: Heizpressenoberteil
- 4: Haubenoberteil
- 5: Dichtung
- 6: Pressenunterteil
- 7: Haubenunterteil
- 8: Mittenmechanismus
- 9: Ringdichtung
- 10: Pumpe
- 11: Vakuumtank
- 12: Haubeninnenraum
- 13: untere Heizplatte
- 14: untere Seitenwandschale
- 15: obere Heizplatte
- 16: obere Seitenwandschale
- 17: unterer Wulstring
- 18: oberer Wulstring
- 19: Segmentring
- 20: Segmentschuh
- 21: Profilsegment / Formsegment
- 22: Schließring
- 23: unterer Rand des Haubenoberteils
- 24: oberer Rand des Haubenunterteils
- 25: Nut
- 26: Durchmesser Ringdichtung
- 27: Tiefe der Nut
- 28: 1. Überlappungsbereich
- 29: 2. Überlappungsbereich
- TH₁: 1. Teilhub
- TH₂: 2. Teilhub
- GH: Gesamthub

## Patentansprüche

1. Heizpresse (1) zum Vulkanisieren eines Fahrzeugreifens mit einer 2-teiligen Haube (4, 7) aus einem Haubenoberteil (4) und einem Haubenunterteil (7) und mit einem in dem Haubenoberteil (4) angeordneten Container (2), welcher die Vulkanisierform mit den Formteilen (14, 16, 17, 18, 21) zum Formen des Reifens aufweist, wobei das Haubenoberteil (4) und das Haubenunterteil (7) mit dem Container (2) derart in Verbindung stehen, so dass beim Zusammenfahren der Haubenteile (4, 7) über einen in axialer Richtung (P1) erfolgenden Gesamthub (GH), bei dem das offene Ende des Haubenoberteils (4) in das offene Ende des Haubenunterteils (7) nahezu spielfrei eintauchbar ist, die Formteile (14, 16, 17, 18, 21) der Vulkanisierform in radialer Richtung (P2) schließbar sind, wobei der Gesamthub (GH) aus einem ersten Teilhub (TH₁) und einem zweiten Teilhub (TH₂) besteht, wobei nach dem ersten Teilhub (TH₁) die Haubenteile (4, 7) in einem ersten Überlappungsbereich (28) überlappen und die Vulkanisierform noch geöffnet ist und wobei nach dem zweiten Teilhub (TH₂) die Haubenteile (4,7) in einem zweiten größeren Überlappungsbereich (29) überlappen und die Vulkanisierform geschlossen ist, wobei zur Erzeugbarkeit eines Vakuums im Haubeninnenraum (12)
- das Haubenoberteil (4) und das Haubenunterteil (7) luftdicht ausgeführt sind,
- zumindest eine Ringdichtung (9) in zumindest einem der beiden Haubenteile (4, 7) im Bereich des ersten Überlappungsbereiches (28) angeordnet ist,
**dadurch gekennzeichnet, dass** zur Erzeugung des Vakuums im Haubeninnenraum (12)
- im Haubeninnenraum (12) mittels einer Pumpe (10) und einem Vakuumtank (11) das Vakuum erzeugbar ist und wobei der Vakuumtank (11) und die Pumpe (10) mit dem Haubeninnenraum (12) in Verbindung stehen und wobei der Vakuumtank (11) und die Pumpe (10) miteinander in Verbindung stehen,
wobei die Ringdichtung (9) ein in seinem Durchmesser (26) veränderbarer Schlauch oder eine differentiell gepumpte Doppelringdichtung ist.

2. Heizpresse (1) nach Anspruch 1, **dadurch gekennzeichnet, dass** die Ringdichtung (9) in dem Haubenunterteil (7) angeordnet ist.

3. Heizpresse (1) nach Anspruch 1 oder 2, **dadurch gekennzeichnet, dass** die Ringdichtung (9) in einer ringkreisförmigen Nut (25) angeordnet ist, wobei der Durchmesser der Ringdichtung (26) geringfügig größer als die Tiefe der Nut (27) ist.

4. Heizpresse (1) nach einem oder mehreren der vorangehenden Ansprüche, **dadurch gekennzeichnet, dass** im ersten Überlappungsbereich (28) der beiden Haubenteile (4, 7) Gleitbänder aus abriebfesten Hochtemperatur-Polymer, wie aus PEEK, angeordnet sind.

5. Heizpresse (1) nach einem oder mehreren der vorangehenden Ansprüche, **dadurch gekennzeichnet, dass** der Vakuumtank (11) ein Volumen aufweist, welche etwa 5 bis 10 Mal größer als das Volumen der geschlossenen Haube (4, 7) ist.

## Claims

1. Heating press (1) for vulcanizing a vehicle tyre, having a two-part hood (4, 7) composed of a hood upper part (4) and a hood lower part (7) and having a container (2) which is arranged in the hood upper part (4) and which has the vulcanizing mould with the mould parts (14, 16, 17, 18, 21) for the moulding of the tyre, wherein the hood upper part (4) and the hood lower part (7) are connected to the container (2) such that, as the hood parts (4, 7) are brought together over a total stroke (GH) that takes place in an axial direction (P1), during which process the open end of the hood upper part (4) can be caused to enter virtually without play into the open end of the hood lower part (7), the mould parts (14, 16, 17, 18, 21) of the vulcanizing mould can be closed in a radial direction (P2), wherein the total stroke (GH) is composed of a first partial stroke (TH₁) and a second partial stroke (TH₂), wherein, after the first partial stroke (TH₁), the hood parts (4, 7) overlap in a first overlap region (28) and the vulcanizing mould is still open, and wherein, after the second partial stroke (TH₂), the hood parts (4, 7) overlap in a second, larger overlap region (29) and the vulcanizing mould is closed, wherein, to enable a vacuum to be generated in the hood interior (12),
- the hood upper part (4) and the hood lower part (7) are designed to be airtight,
- at least one ring seal (9) is arranged in at least one of the two hood parts (4, 7) in the region of the first overlap region (28),
**characterized in that**, to generate the vacuum in the hood interior (12),
- the vacuum can be generated in the hood interior (12) by means of a pump (10) and a vacuum tank (11), and wherein the vacuum tank (11) and the pump (10) are connected to the hood interior (12) and wherein the vacuum tank (11) and the pump (10) are connected to one another,
wherein the ring seal (9) is a hose that is variable in terms of its diameter (26) or is a differentially inflated double ring seal.

2. Heating press (1) according to Claim 1, **characterized in that** the ring seal (9) is arranged in the hood lower part (7).

3. Heating press (1) according to Claim 1 or 2, **characterized in that** the ring seal (9) is arranged in a circular-ring-shaped groove (25), wherein the diameter of the ring seal (26) is slightly greater than the depth of the groove (27).

4. Heating press (1) according to one or more of the preceding claims, **characterized in that** sliding bands composed of wear-resistant high-temperature polymer, such as of PEEK, are arranged in the first overlap region (28) of the two hood parts (4, 7).

5. Heating press (1) according to one or more of the preceding claims, **characterized in that** the vacuum tank (11) has a volume that is approximately 5 to 10 times greater than the volume of the closed hood (4, 7).

## Revendications

1. Presse chauffante (1) pour la vulcanisation d'un pneu de véhicule, comprenant un capot (4, 7) en deux parties, constitué d'une partie supérieure de capot (4) et d'une partie inférieure de capot (7), et comprenant un conteneur (2) disposé dans la partie supérieure de capot (4), lequel possède le moule de vulcanisation avec les pièces de moulage (14, 16, 17, 18, 21) destinées au moulage du pneu, la partie supérieure de capot (4) et la partie inférieure de capot (7) étant reliées au conteneur (2) de telle sorte que, lors du rapprochement des parties de capot (4, 7) sur une course totale (GH) réalisée dans la direction axiale (P1), lors de laquelle l'extrémité ouverte de la partie supérieure de capot (4) peut être introduite pratiquement sans jeu dans l'extrémité ouverte de la partie inférieure de capot (7), les pièces de moulage (14, 16, 17, 18, 21) du moule de vulcanisation peuvent être fermées dans la direction radiale (P2), la course totale (GH) se composant d'une première course partielle (TH₁) et d'une deuxième course partielle (TH₂), après la première course partielle (TH₁), les parties de capot (4, 7) se chevauchant dans une première zone de chevauchement (28) et le moule de vulcanisation étant encore ouvert et, après la deuxième course partielle (TH₂), les parties de capot (4, 7) se chevauchant dans une deuxième zone de chevauchement (29) plus grande et le moule de vulcanisation étant fermé, en vue de pouvoir générer un vide dans l'espace intérieur de capot (12)
- la partie supérieure de capot (4) et la partie inférieure de capot (7) étant réalisées étanches à l'air,
- au moins un joint d'étanchéité annulaire (9) étant disposé dans au moins l'une des deux parties de capot (4, 7) dans la zone de la première zone de chevauchement (28),
**caractérisé en ce que**, pour générer le vide dans l'espace intérieur de capot (12),
- le vide peut être généré dans l'espace intérieur de capot (12) au moyen d'une pompe (10) et d'un réservoir à vide (11), et le réservoir à vide (11) et la pompe (10) étant en communication avec l'espace intérieur du capot (12), et le réservoir à vide (11) et la pompe (10) étant en communication l'un avec l'autre, le joint d'étanchéité annulaire (9) étant un tuyau dont le diamètre (26) peut être modifié ou un double joint d'étanchéité annulaire à pompage différentiel.

2. Presse chauffante (1) selon la revendication 1, **caractérisée en ce que** le joint d'étanchéité annulaire (9) est disposé dans la partie inférieure de capot (7).

3. Presse chauffante (1) selon la revendication 1 ou 2, **caractérisée en ce que** le joint d'étanchéité annulaire (9) est disposé dans une rainure (25) en forme d'anneau circulaire, le diamètre du joint d'étanchéité annulaire (26) étant légèrement supérieur à la profondeur de la rainure (27).

4. Presse chauffante (1) selon une ou plusieurs des revendications précédentes, **caractérisée en ce que** des bandes de glissement en polymère haute température résistant à l'abrasion, tel que le PEEK, sont disposées dans la première zone de chevauchement (28) des deux parties de capot (4, 7).

5. Presse chauffante (1) selon une ou plusieurs des revendications précédentes, **caractérisée en ce que** le réservoir à vide (11) présente un volume qui est environ 5 à 10 fois plus grand que le volume du capot (4, 7) fermé.
